# EUROPÄISCHE PATENTSCHRIFT

(11) **EP 0 538 185 B1**
(45) Veröffentlichungstag und Bekanntmachung des Hinweises auf die Patenterteilung: **17.05.1995**
(21) Anmeldenummer: 92810715.0
(22) Anmeldetag: 17.09.1992
(51) Int. Cl.: C09G 3/00, A63C 5/12, A63C 5/044

(54) **Skibelag und Füllstoff für einen Belag**
Ski-sole coating and filler for a coating
Semelle de ski et matériau de remplissage pour un revêtement

(30) Priorität: 18.10.1991 CH 3062/91
(43) Veröffentlichungstag der Anmeldung: 21.04.1993
(73) Patentinhaber: IMS KUNSTSTOFF AG, CH-3063 Ittigen-Bern (CH)
(72) Erfinder: Geissbühler, Urs, CH-3604 Thun (CH)
(74) Vertreter: Hepp, Dieter

(56) Entgegenhaltungen:
- EP-A- 0 399 092
- CH-A- 660 018

## Beschreibung

Die Erfindung betrifft einen Skibelag aus Kunststoff, insbesondere aus gesintertem Polyethylen (PE). Der Gleitvorgang zwischen der Lauffläche eines Ski's und dem Schnee ist relativ komplex und nicht in allen Einzelheiten erforscht. Bekannt ist, dass aufgrund der beim Gleitvorgang entstehenden Reibungswärme Schneekristalle lokal schmelzen. Die dabei entstehenden Wasserpartikel können zu teilweise hydrodynamischen Schmierverhältnissen führen. Bei höheren Geschwindigkeiten kann sich das gebildete Wasser sogar ganzflächig am Skibelag ausbreiten, was dann jedoch zu einem unerwünschten "Saugeffekt" führen kann, der die Gleitgeschwindigkeit negativ beeinflusst.

Durch Beimischung von Zuschlagstoffen, wie z.B. Aluminiumpulver und/oder Grafit und/oder Russ kann dieser negative Effekt verhindert werden. Dies resultiert vor allem daraus, dass Kohlenstoff eine höhere thermische Leitfähigkeit aufweist, als das fast ausschliesslich als Skibelagsmaterial eingesetzte Niederdruckpolyethylen. (Dieser Effekt ist in den CH-Patenten 657 993 oder 660 018 beschrieben.)

Derartige z.B. mit Kohlenstoff modifizierte Skibeläge sind vor allem bei wärmeren Schneetemperaturen Skibelägen überlegen, die aus Niederdruckpolyethylen ohne Zuschlagstoffe bestehen.

Bei mittelkalten Schneebedingungen und variierenden Gleitgeschwindigkeiten kann aber durch die erhöhte thermische Leitfähigkeit des Belags zuviel Reibungswärme durch den Belag abgeleitet werden, die Temperatur der Lauffläche bleibt niederer und es schmelzen nur eine ungenügende Anzahl von Schneekristallen.

Der Erfindung liegt die Aufgabe zugrunde, einen Skibelag und einen Füllstoff für einen Skibelag zu schaffen, die einerseits bei höheren Schneetemperaturen (z.B. von 0 bis -8 °C) gute thermische Leitfähigkeit aufweisen und dementsprechend den "Saugeffekt" vermeiden, die aber andererseits bei mittelkalten Schneebedingungen und gemischter Fahrweise (etwa -8°C bis -20 °C) weniger Reibungswärme durch den Belag ableiten und damit die in diesem Bereich gewünschte Erzeugung von Wasserpartikeln gewährleisten. Erfindungsgemäss wird diese Aufgabe in erster Linie gemäss Kennzeichen der Patentansprüche gelöst.

Durch die Verwendung eines Füllstoffs mit hoher thermischer Leitfähigkeit wird erfindungsgemäss generell die Ableitung von Reibungswärme durch den Belag hindurch verbessert. Auf der andern Seite wird jedoch durch die Beimengung eines Zuschlagstoffs, der bei einem oder mehreren vorbekannten Punkten aus der festen in die flüssige Phase übergeht und dabei Wärmeenergie aufnimmt, gewährleistet, dass die derart gespeicherte Phasenumwandlungsenergie nicht durch den Belag abgeleitet wird, sondern wieder abgegeben wird, sobald die Oberflächentemperatur des Belags unter den Schmelzpunkt des Zuschlagstoffs absinkt. Auf diese Weise wird die thermische Leitfähigkeit des Skibelags derart beeinflussbar, dass er sich praktisch beliebig an die gewünschten Eigenschaften eines Skis anpassen lässt. Derartige Zuschlagstoffe mit einer um den Gefrierpunkt liegenden Phasenumwandlungstemperatur sind in Vielzahl bekannt und gebräuchlich. Durch Herstellen von Mischungen oder Legierungen lässt sich dabei auf bekannte Weise der Schmelzpunkt einstellen. Durch Dosieren der Menge der Zuschlagstoffe lässt sich ebenfalls das thermische Verhalten beeinflussen.

Auch ist es möglich, verschiedene Zuschlagstoffe mit verschiedenen Schmelzpunkten beizumengen, und dadurch das thermische Verhalten in einem grösseren Temperaturbereich zu steuern. So kann z.B. auch für einen Rennbelag oder einen Belag für schnellere Fahrweise die thermische Leitfähigkeit erhöht und die Wärmekapazität des durch die Zuschlagstoff gebildeten "Wärmespeichers" durch niederere Schmelztemperatur beeinflusst werden, um die zu erwartende höhere Reibungswärme sicher ableiten zu können.

Dem Fachmann sind derartige Anpassungen möglich, ohne dass der Rahmen der Erfindung verlassen würde. Allgemein können dabei Zuschlagstoffe mit Schmelztemperaturen zwischen -20°C und +5°C eingesetzt werden,. Z.B durch Einsintern in den Kunststoff des Belags bleibt der Zuschlagstoff dabei auch in seiner flüssigen Phase gebunden und im Belag erhalten. Wichtig ist dabei, dass ein Zuschlagstoff verwendet wird, der bei den Einarbeitungstemperaturen nicht flüchtig ist (verdampft), sondern z.B. die Kohlenstoffpartikel und/oder das Kunststoffpulver benetzt.

Als Zuschlagstoffe eignen sich besonders gut organische kristalline Verbindungen, wie insbesondere Alkane oder hochsiedende Verbindungen wie Oleinalkohol (Schmelzpunkt = 0°), Undecylaldehyd (Schmelzpunkt -4 °C), 2-Allylphenol (Schmelzpunkt -6°C), Polyethylenglycole mit z.B. Molmasse 400 ± 20 [g/mol] und einem Schmelzpunkt bei 5°C, oder Molmasse 300 ± 10 [g/mol] und dem Schmelzpunkt bei -10°C .

Besonders gute Eigenschaften weist Tridekan (C₁₃H₂₈) auf.

Gute Wärmekapazität ergeben auch anorganische kristalline Verbindungen. Z.B. lässt sich durch Gallium oder Galliumlegierungen ein Zuschlagstoff mit Schmelztemperaturen im geforderten Bereich um den Gefrierpunkt einstellen. Besonders bewährt haben sich Legierungen aus Gallium, Indium und Zinn. Der Zuschlagstoff soll dabei 65 bis 75%G Gallium und Indium bzw. Zinn von 35 bis 25% enthalten, wobei das Indium je nach Menge des Galliums 20 bis 30%G und das Zinn 3 bis 7%G betragen kann. (Gewichtsprozent immer bezogen auf die Gesamtmenge des Zuschlagstoffs.)

Besonder vorteilhaft ist es, wenn die Legierung etwa 70%G Gallium, etwa 25%G Indium und etwa 5%G Zinn enthält. Als besonders universell geeignet haben sich Zuschlagstoffe erwiesen, deren Schmelzpunkt bei etwa +5°C bis -8°C, vorzugsweise bei etwa 0°C bis -4°C liegt.

Im Hinblick auf gute thermische Ableitung ist es vorteilhaft, wenn der Anteil des thermisch gut leitfähigen Materials, insbesondere des Aluminiumpulvers oder des Kohlenstoffs etwa 5% bis 30%G des Kunststoffs, insbesondere des Polyethylens beträgt.

Bei Verwendung von organischen kristallinen Verbindungen als Zuschlagstoff lässt sich die Erfindung vorteilhaft mit einer Beimengung von 1% bis 20%G bezogen auf 100 Teile des Kunststoffs, insbesondere des PE verwirklichen, vorzugsweise im Bereich von 1%G bis 10%G Anteil der Zuschlagstoffe, bezogen auf 100% Kunststoff.

Bei Verwendung von anorganischen Zuschlagstoffen als "Wärmespeicher" im Belagsmaterial lässt sich die Erfindung im Bereich zwischen 0,001%G und 10%G Zuschlagstoffe bezogen auf 100 Teile PE verwirklichen, wobei der Anteil besonders vorteilhaft 0,01%G bis 1,0%G beträgt.

Ersichtlicherweise lässt sich durch die Auswahl der Schmelztemperatur und die Menge des "Wärmespeicher-Zuschlagstoffs" die Eigenschaft einer Lauffläche praktisch beliebig beeinflussen. So wurde z.B. gemessen, dass sich eine Laufflächentemperatur von -0,6°C bei einer Schneetemperatur von -4,8°C einstellen kann. (Vgl. Cold Regions Research + Engineering Laboratory Report 89-23.) Dies weist auf hohe Wärmeenergie und schlecht Wärmeableitung hin. Durch die erfindungsgemässen Zuschlagstoffe kann nun ein "thermoaktiver" Effekt in den gewünschten Bereichen eingestellt werden.

Die Erfindung ist nachstehend in Beispielen näher erläutert:

### Beispiel 1:

In einem Henschel-Heissmischer werden 100 Teile eines Russes mit 20nm Teilchengrösse und einem Oelbedarf von 500% mit 10 Teilen Tridekan (C₁₃H₂₈) 10 Minuten innig gemischt.

15 Teile dieser Mischung werden in einem zweiten Arbeitsgang im Schnellmischer mit 85 Teilen ultrahochmolekularem Niederdruckpolyethylen Hostalen GUR 412 mit einer Molmasse von ca. 4·10⁶ und einem mittleren Korndurchmesser von ca. 150 mü innig gemischt.

In einer zylindrischen Pressform wird dieses Gemisch unter bekannten Wärme- und Druckanwendungen (wie z.B. in der Broschüre von Hoechst zu deren Niederdruck PE "Hostalen GUR" [Broschüre HKR 112 - 7089 C 12299/14] angegeben), zu einem homogenen zylindrischen Sinterkörper gesintert. Nach dem Abkühlen wird von diesem zylindrischen Sinterkörper ein endloses Band in der gewünschten Dicke des Skibelages z.B. von 1,4mm abgeschält.

Der am Belag mittels Dynamischer Differenzkalorimeterie (DDK) gemessene Umwandlungspunkt liegt bei -4°C.

Ski ausgerüstet mit diesem Belag zeigen bei Gleittests eine signifikant höhere Gleitgeschwindigkeit, als analoge Ski mit einem Belag welcher ohne Tridekan formuliert ist.

### Beispiel 2:

In Analogie mit Beispiel 1 wird in einer ersten Phase eine innige Mischung von 100 Teilen des erwähnten Russes mit 1 Teil einer Legierung von 70% Gallium, 25% Indium und 5% Zinn hergestellt. 10 Teile dieser Mischung werden wie in Beispiel 1 beschrieben, mit 90 Teilen UHMW PE gemischt und zum Skibelag verarbeitet. Der mit DDK gemessene Umwandlungspunkt liegt bei +5°C.

Ein ohne Russ hergestelltes, inniges Gemisch von 100 Teilen UHMW PE und 0,1 Teil der Ga/In/Sn-Legierung zeigt im DDK keinen Umwandlungspunkt und im Gleittest kein besseres Gleitverhalten.

Es wird vermutet, dass bei dem erfindungsgemässen Mischmodus die Ga/In/Sn-Legierung durch den Russ beim Sintervorgang gegen oxidative Veränderung geschützt wird.

Selbstverständlich kann anstelle des in den Beispielen vorgeschlagenen PE auch ein anderes Kunststoffmaterial, wie z.B. PTFE (Polytetrafluoräthylen) verwendet werden. Auch lässt sich selbstverständlich der Skibelag nicht nur im Sinterverfahren mit anschliessendem Schälen sondern z.B. auch im Extrusionsverfahren herstellen. Wesentlich für die Erfindung ist die Beimengung eines Füllstoffs, der aufgrund der Phasenumwandlung von der festen in die flüssige Phase als Wärmespeicher im Laufflächenmaterial eines Ski's wirkt.

## Patentansprüche

1. Skibelag, insbesondere aus gesintertem Kunststoffpulver oder Kunststoffgranulat, wie Polyethylen mit einem Füllstoff zur Verbesserung der Gleiteigenschaften, dadurch gekennzeichnet, dass der Füllstoff (1.) einen Stoff mit höherer thermischer Leitfähigkeit als der Kunststoff zur Verbesserung der Wärmeableitung vom Belag enthält, insbesondere dass er pulverförmigen Kohlenstoff enthält und dass der Füllstoff (2.) wenigstens einen Zuschlag-Stoff enthält, dessen Schmelztemperatur bei einer vorbestimmbaren Laufflächentemperatur, vorzugsweise zwischen -15°C und +5°C liegt.

2. Skibelag nach Anspruch 1, dadurch gekennzeichnet, dass der Füllstoff wenigstens zwei Zuschlagstoffe mit verschiedenen Schmelztemperaturen zwischen -15°C und +5°C enthält.

3. Skibelag nach Anspruch 1 oder 2, dadurch gekennzeichnet, dass der Zuschlagstoff eine organische kristalline Verbindung ist.

4. Skibelag nach Anspruch 3, dadurch gekennzeichnet, dass der Zuschlagstoff ein Alkan ist.

5. Skibelag nach Anspruch 4, dadurch gekennzeichnet, dass der Zuschlagstoff Tridekan (C₁₃H₂₈) ist.

6. Skibelag nach einem der vorangegangenen Ansprüche, dadurch gekennzeichnet, dass der Zuschlagstoff eine anorganische kristalline Verbindung ist.

7. Skibelag nach Anspruch 6, dadurch gekennzeichnet, dass der Zuschlagstoff Gallium enthält.

8. Skibelag nach Anspruch 7, dadurch gekennzeichnet, dass der Zuschlagstoff eine Galliumlegierung enthält.

9. Skibelag nach Anspruch 8, dadurch gekennzeichnet, dass der Zuschlagstoff eine Legierung mit Gallium, Indium und Zinn enthält.

10. Skibelag nach Anspruch 9, dadurch gekennzeichnet, dass die Legierung etwa 65% bis 75%G Gallium, 20% bis 30%G Indium und 3% bis 7%G Zinn enthält.

11. Skibelag nach Anspruch 10, dadurch gekennzeichnet, dass die Legierung etwa 70%G Gallium, etwa 25%G Indium und etwa 5%G Zinn enthält.

12. Skibelag nach einem der vorangegangenen Ansprüche, dadurch gekennzeichnet, dass die Schmelztemperatur des Zuschlagstoffs etwa +5°C bis -8°C beträgt.

13. Skibelag nach einem der Ansprüche 1 bis 12, dadurch gekennzeichnet, dass die Schmelztemperatur des Zuschlagstoffs etwa 0°C bis -4°C beträgt.

14. Skibelag nach einem der vorangegangenen Ansprüche, dadurch gekennzeichnet, dass der Anteil des Stoffs mit höherer thermischer Leitfähigkeit, insbesondere der Kohlenstoffanteil etwa 5% bis 30%G des PE beträgt.

15. Skibelag nach einem der vorangegangenen Ansprüche, dadurch gekennzeichnet, dass der Anteil der organischen kristallinen Verbindung des Zuschlagstoffs 1 bis 20%G bezogen auf 100 Teile PE beträgt.

16. Skibelag nach Anspruch 15, dadurch gekennzeichnet, dass der Anteil etwa 1%G bis 10%G beträgt.

17. Skibelag nach einem der vorangegangenen Ansprüche, dadurch gekennzeichnet, dass der Anteil der anorganischen kristallinen Verbindung des Zuschlagstoffs etwa 0,001%G bis 10%G bezogen auf 100 Teile PE beträgt.

18. Skibelag nach Anspruch 17, dadurch gekennzeichnet, dass der Anteil etwa 0,01% bis 1,0%G beträgt.

19. Füllstoff zur Beimengung zu PE-Pulver oder PE-Granulat zur Herstellung eines Skibelagsmaterials, dadurch gekennzeichnet, dass der Füllstoff einen pulver- oder granulatförmigen Zuschlagstoff, insbesondere Kohlenstoff und wenigstens einen bei einer vorbestimmbaren Laufflächentemperatur aus der flüssigen Phase in die feste Phase übergehenden Zuschlagstoff, vorzugsweise mit einer Schmelztemperatur zwischen -15°C und +5°C enthält.

20. Füllstoff nach Anspruch 19, dadurch gekennzeichnet, dass er wenigstens einen Zuschlagstoff mit einer Schmelztemperatur zwischen +5°C und -8°C enthält.

21. Verwendung eines aufgrund der Phasenumwandlung von der festen in die flüssige Phase als Wärmespeicher für beim Fahren entstehende Wärmeenergie wirkenden Zuschlagstoffs im Laufflächenmaterial eines Skis.

22. Verfahren zum Herstellen eines Füllstoffs nach einem der vorangehenden Ansprüche, dadurch gekennzeichnet, dass wenigstens ein bei einer vorbestimmbaren Laufflächentemperatur, insbesondere bei Temperaturen zwischen -15°C und +5°C in seine feste Phase übergehender, flüssiger Zuschlagstoff einem pulver- oder granulatförmigen Zuschlagstoff beigemischt wird.

23. Verfahren zum Herstellen eines Füllstoffs nach Anspruch 22, dadurch gekennzeichnet, dass der flüssige Zuschlagstoff mit Kohlenstoff, insbesondere mit Russ oder Grafit vermischt wird.

## Claims

1. Ski coating, in particular of sintered plastic powder or plastic granules, such as polyethylene with a filler for the improvement of the sliding properties, characterized in that the filler (1.) contains a material with higher thermal conductivity than the plastic for improvement of the conductivity of the coating, in particular that it contains powdered carbon and that the filler (2.) contains at least one additive, the melting temperature of which lies at a predeterminable running surface temperature, preferably between -15°C and +5°C.

2. Ski coating according to claim 1, characterized in that the filler contains at least two additives with differing melting temperatures between -15°C and +5°C.

3. Ski coating according to claims 1 or 2, characterized in that the additive is an organic cristalline compound.

4. Ski coating according to claim 3, characterized in that the additive is an alkane.

5. Ski coating according to claim 4, characterized in that the additive is tridecane (C₁₃H₂₈).

6. Ski coating according to one of the preceding claims, characterized in that the additive is an inorganic cristalline compound.

7. Ski coating according to claim 6, characterized in that the additive contains gallium.

8. Ski coating according to claim 7, characterized in that the additive contains a gallium alloy.

9. Ski coating according to claim 8, characterized in that the additive contains an alloy with gallium, indium and tin.

10. Ski coating according to claim 9, characterized in that the alloy contains approximately 65% to 75%W gallium, 20% to 30%W indium and 3% to 7%W tin.

11. Ski coating according to claim 10, characterized in that the alloy contains approximately 70%W gallium, approximately 25%W indium and approximately 5%W tin.

12. Ski coating according to one of the preceding claims, characterized in that the melting temperature of the additive amounts to between approximately +5°C and -8°C.

13. Ski coating according to one of the claims 1 to 12, characterized in that the melting temperature of the additive amounts to between approximately 0°C and -4°C.

14. Ski coating according to one of the preceding claims, characterized in that the portion of the material with higher thermal conductivity, in particular the carbon portion, amounts to approximately 5% to 30%W of the PE.

15. Ski coating according to one of the preceding claims, characterized in that the portion of the organic cristalline compound of the additive amounts to between 1% and 20%W in relation to 100 parts PE.

16. Ski coating according to claim 15, characterized in that the portion amounts to between approximately 1%W and 10%W.

17. Ski coating according to one of the preceding claims, characterized in that the portion of the inorganic cristalline compound of the additive amounts to between approximately 0.001%W to 10%W in relation to 100 parts PE.

18. Ski coating according to claim 17, characterized in that the portion amounts to between approximately 0.01% and 1,0%W.

19. Filler for mixing into PE powder or PE granules for the manufacture of a ski coating material, characterized in that the filler contains a powdered or granular additive, in particular carbon and at least one additive which transforms from the liquid phase into the solid phase at a predeterminable running surface temperature, preferably with a melting temperature of -15°C to +5°C.

20. Filler according to claim 19, characterized in that it contains at least one additive with a melting temperature between +5°C and -8°C.

21. Use of an additive in the running surface of a ski which, on the basis of the phase transformation from the solid to the liquid phase, acts as a heat capacitor for the heat energy arising during ski travel.

22. Method of manufacturing a filler according to one of the preceding claims, characterized in that at least one liquid additive, which transforms into its solid phase at a predeterminable running surface temperature, in particular at temperatures between -15°C and +5°C, is mixed with a powdered or granular additive.

23. Method of manufacture of a filler according to claim 22, characterized in that the liquid additive is mixed with carbon, in particular with carbon black or graphite.

## Revendications

1. Revêtement de ski, en particulier en poudre ou en granulés de matière plastique frittés comme du polyéthylène contenant un additif destiné à améliorer les caractéristiques de glissement, caractérisé en ce que l'additif (1) contient une matière présentant une conductibilité thermique supérieure à celle de la matière plastique, afin d'améliorer la dissipation de chaleur du revêtement, en particulier en ce qu'il contient du carbone en poudre, et en ce que l'additif (2) contient au moins une charge dont la température de fusion se situe de préférence entre -15°C et +5°C en présence d'une température de semelle apte à être prédéfinie.

2. Revêtement de ski selon la revendication 1, caractérisé en ce que l'additif contient au moins deux charges qui présentent des températures de fusion différentes situées entre -15°C et +5°C.

3. Revêtement de ski selon la revendication 1 ou 2, caractérisé en ce que la charge est un composé cristallin organique.

4. Revêtement de ski selon la revendication 3, caractérisé en ce que la charge est un alcane.

5. Revêtement de ski selon la revendication 4, caractérisé en ce que la charge est du tridécane (C₁₃H₂₈).

6. Revêtement de ski selon l'une des revendications précédentes, caractérisé en ce que la charge est un composé cristallin inorganique.

7. Revêtement de ski selon la revendication 6, caractérisé en ce que la charge contient du gallium.

8. Revêtement de ski selon la revendication 7, caractérisé en ce que la charge contient un alliage de gallium.

9. Revêtement de ski selon la revendication 8, caractérisé en ce que la charge contient un alliage de gallium, d'indium et d'étain.

10. Revêtement de ski selon la revendication 9, caractérisé en ce que l'alliage contient environ 65 % à 75 % en poids de gallium, 20 % à 30 % en poids d'indium et 3 % à 7 % en poids d'étain.

11. Revêtement de ski selon la revendication 10, caractérisé en ce que l'alliage contient environ 70 % en poids de gallium, environ 25 % en poids d'indium et environ 5 % en poids d'étain.

12. Revêtement de ski selon l'une des revendications précédentes, caractérisé en ce que la température de fusion de la charge est d'environ +5°C à -8°C.

13. Revêtement de ski selon l'une des revendications 1 à 12, caractérisé en ce que la température de fusion de la charge est d'environ 0°C à -4°C.

14. Revêtement de ski selon l'une des revendications précédentes, caractérisé en ce que la proportion de la matière présentant une conductibilité thermique plus élevée, en particulier la proportion de carbone, est d'environ 5 % à 30 % en poids du PE.

15. Revêtement de ski selon l'une des revendications précédentes, caractérisé en ce que la proportion du composé cristallin organique de la charge est de 1 à 20 % en poids par rapport à 100 parties de PE.

16. Revêtement de ski selon la revendication 15, caractérisé en ce que cette proportion est d'environ 1 à 10% en poids.

17. Revêtement de ski selon l'une des revendications précédentes, caractérisé en ce que la proportion du composé cristallin inorganique de la charge est d'environ 0,001 à 10% en poids par rapport à 100 parties de PE.

18. Revêtement de ski selon la revendication 17, caractérisé en ce que cette proportion est d'environ 0,01 % à 1,0 % en poids.

19. Additif destiné à être ajouté à de la poudre de PE ou à des granulés de PE en vue de la fabrication d'un matériau de revêtement de ski, caractérisé en ce que l'additif contient une charge en poudre ou en granulés, en particulier du carbone, et au moins une charge qui passe de la phase liquide à la phase solide à une température de semelle apte à être prédéfinie et qui présente de préférence une température de fusion située entre -15°C et +5°C.

20. Additif selon la revendication 19, caractérisé en ce qu'il contient au moins une charge qui présente une température de fusion située entre +5°C et -8°C.

21. Utilisation, dans le matériau de semelle d'un ski, d'une charge qui, en raison du passage de la phase solide à la phase liquide, agit comme accumulateur de chaleur pour l'énergie thermique générée lors de la course.

22. Procédé pour fabriquer un additif selon l'une des revendications précédentes, caractérisé en ce qu'on ajoute au moins une charge liquide qui se transforme en phase solide à une température de semelle apte à être prédéfinie, en particulier à des températures situées entre -15°C et +5°C, à une charge en poudre ou en granulés.

23. Procédé pour fabriquer un additif selon la revendication 22, caractérisé en ce qu'on mélange la charge liquide avec du carbone, en particulier avec du noir de carbone ou du graphite.
